# EUROPEAN PATENT APPLICATION

(11) **EP 4 717 417 A1**
(43) Date of publication of application: **01.04.2026**
(21) Application number: 25204111.6
(22) Date of filing: 23.09.2025
(51) Int. Cl.: B25J 9/16, B25J 13/08, B25J 19/02

(54) **ROBOT CONTROL APPARATUS**

(30) Priority: 25.09.2024 JP 2024165989
(71) Applicant: Nachi-Fujikoshi Corp., Tokyo 105-0021 (JP)
(72) Inventor: FUJISAWA, Tatsuro, Toyama, 930-8511 (JP)
(74) Representative: Plougmann Vingtoft a/s

(57) **Abstract**

A robot control apparatus (3) of a robot (1) equipped with a plurality of non-contact sensors (2, 2b, 2e), includes a sensor position detector (22) that determines a position of each of the non-contact sensors (2, 2b, 2e) and an interference detector (23) that examines the determined positions of the non-contact sensor (2, 2b, 2e) to determines two of the non-contact sensors (2, 2b, 2e), a target sensor (2, 2e) and a counterpart sensor (2, 2b), cause interference to each other in response to a determination that the counterpart sensor (2, 2b) is situated in a present detection range (37) of the target sensor (2, 2e).

## Description

### Technical Filed

The present invention relates to a robot control apparatus of a robot equipped with a plurality of non-contact sensors.

### Background Art

It is prevalent that humans and robots collaborate with each other to perform a certain work on a workpiece. The robots used in such work arrangements are called collaborative robots. Some collaborative robots are equipped with non-contact sensors for detecting nearby humans and other objects.

For example, Japanese Patent Application Laid-Open No. 2021-20287 describes installing capacitive proximity sensors on a robot arm to detect objects present in proximity around the robot.

### Summary

### Technical Problem

A robot can execute various postures for performing tasks. During the operation, thus, the non-contact sensors installed on the robot may become situated to interfere with each other. Interference posed among the non-contact sensors could cause a false detection by the non-contact sensors.

The present invention provides a robot control apparatus that can reduce false detections by the non-contact sensors.

### Solution to Problem

To solve the foregoing problem, a robot control apparatus according to the present invention is embodied with a robot equipped with a plurality of non-contact sensors. The robot control apparatus is embodied to comprise a sensor position detector configured to detect a position assumed by each of the non-contact sensors in association with a posture of the robot, and an interference detector configured to select a target sensor and a counterpart sensor from the plurality of non-contact sensors and examine the determined positions of the plurality of non-contact sensors to determine whether the counterpart sensor is situated in a preset detection range of the target sensor to cause interference to the target sensor.

In the robot control apparatus according to the present invention, the interference detector is configured to determine, upon determination that the counterpart sensor is situated within the detection range of the target sensor, that the counterpart sensor causes interference to the target sensor.

In the robot control apparatus according to the present invention, the detection range of the target sensor is defined in advance in a shape of a three-dimensional space.

In the robot control apparatus according to the present invention, the detection range of the target sensor is defined with boundary surfaces, and the interference detector is configured to, upon a determination that one of the boundary surfaces cuts across the counterpart sensor or upon a determination that the counterpart sensor is situated in its entirety in the detection range, determine that the counterpart sensor causes interference to the target sensor.

The robot control apparatus according to the present invention further comprises a sensor configurator configured to, upon a determination by the interference detector that the counterpart sensor causes interference to the target sensor, configure at least one of the target sensor and the counterpart sensor in a manner that eliminates the interference.

In the robot control apparatus according to the present invention, the sensor configurator is configured to perform at least one of interference eliminating operations on at least one of the target sensor and the counterpart sensor. The interference elimination operations include disabling an object detection function of the target sensor, changing the detection range of the target sensor, and changing a detection direction of the target sensor.

### Advantageous Effect of Invention

The robot control apparatus according to the present invention can reduce false detections by the non-contact sensors.

### Brief Description of the Drawings

Fig. 1 is a schematic diagram showing an overall configuration of an exemplary robot system according to an embodiment of the present invention;
Fig. 2 is a diagram showing examples of various functions implemented by a control apparatus shown in Fig. 1;
Fig. 3 is a diagram explaining an exemplary method for determining a position of a non-contact sensor by a sensor position detector of Fig. 2;
Fig. 4 is a diagram showing an example of a positional relationship that causes interference between two non-contact sensors in Fig. 1;
Fig. 5 is a diagram showing another example of a positional relationship that causes interference between two non-contact sensors in Fig. 1;
Fig. 6 is a diagram showing examples of operations for eliminating interference by a sensor configurator of Fig. 2; and
Fig. 7 is a flowchart showing an example of a procedure executed by the control apparatus of Fig. 1 to determine interference.

### Detailed Description of Embodiments

Hereinafter, an embodiment of the present invention will be described with reference to the accompanying drawings. In order to facilitate understanding of the description, like components shown in drawings will be denoted by the same reference numerals where possible, and duplicate descriptions will be omitted where appropriate.

### === Embodiment ===

### <Overall Configuration>

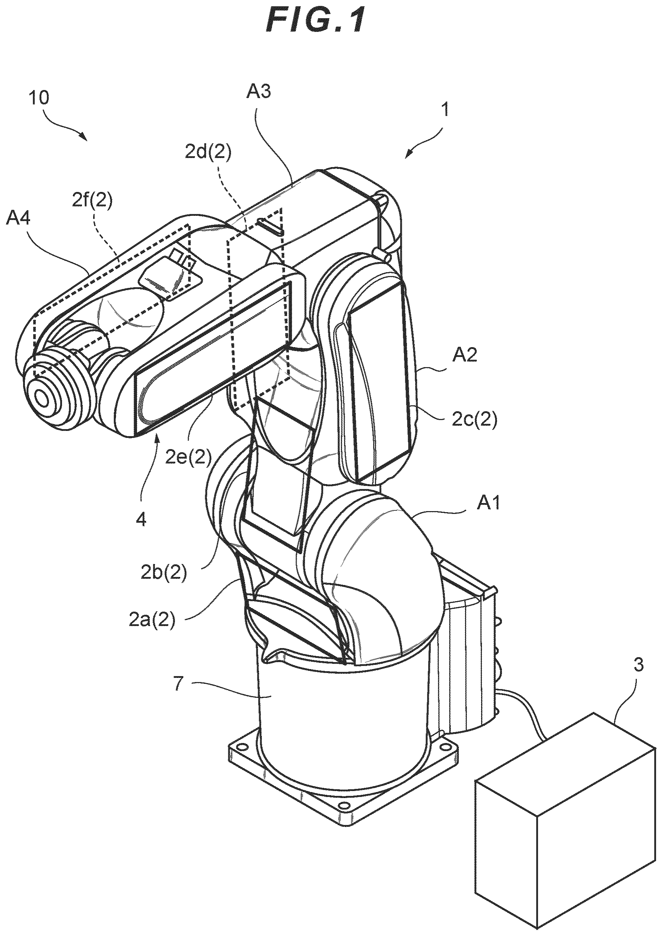

Fig. 1 is a diagram schematically showing an overall configuration of an exemplary robot system 10 that includes a control apparatus 3 serving as a robot control apparatus according to an embodiment of the present invention.

The robot system 10 is an industrial robot that performs tasks such as machining and transporting of a workpiece. For example, the robot system 10 is a collaborative robot that performs tasks within a work space shared by human workers.

As shown in Fig. 1, the robot system 10 includes a robot 1, non-contact sensors 2, and a control apparatus 3.

The robot 1 is configured with a plurality of articulated arms and a plurality of joints. Specifically, the robot 1 includes a base 7, a first arm A1, a second arm A2, a third arm A3, and a fourth arm A4. The number of arms included is not limited to a particular number. The base 7 is the foundation of the robot 1. The base 7 is fixed to the floor surface or a wall surface, for example, and supports the entire robot 1. The first arm A1 is connected to the base 7 via a rotating shaft. The first arm A1 is rotated about the rotating shaft relative to the base 7 by a motor (not-shown). Similarly to the first arm A1, the second, third, and fourth arms A2, A3, and A4 are each rotated about their respective rotating shafts by motors (not-shown). A tool or the like is attached to the distal end of the fourth arm A4. With such a configuration, the arms are connected in series with the rotating shafts functioning as joints and made movable. By virtue of the movable joints, the robot 1 can perform predetermined operations.

The non-contact sensors 2 are functional in detecting humans and other objects in a non-contact manner. In the present embodiment, an "object" should be construed to have a broad definition and includes a human, a workpiece, and other objects. For example, the non-contact sensors 2 detect objects situated in proximity. The non-contact sensors 2 may detect a displacement of objects. The present embodiment is contemplated with the non-contact sensors 2 that can detect objects in proximity.

The non-contact sensors 2 each comprise a capacitive sensor, for example. It should be noted that a capacitive censor is a non-limiting example of the non-contact sensor 2. The non-contact sensor 2 may be any type of sensor as long as it can detect objects in a non-contact manner. For example, any of infrared, ultrasonic, millimeter wave, or LiDAR sensor may qualify to form the non-contact sensor 2. The present embodiment is contemplated with a capacitive sensor employed as an example of the non-contact sensor 2.

More than one non-contact sensor 2 is installed on the robot 1. As shown in Fig. 1, the robot 1 is formed with the non-contact sensors 2 that include a non-contact sensor 2a, a non-contact sensor 2b, a non-contact sensor 2c, a non-contact sensor 2d, a non-contact sensor 2e, and a non-contact sensor 2f, for example. The installation positions and the number of non-contact sensors 2 installed on the robot 1 shown in Fig. 1 are exemplary configuration of the embodiment. The installation positions and the number of non-contact sensors 2 installed are not limited to the specific configuration shown in Fig. 1.

The non-contact sensor 2 includes a detection electrode. The detection electrode is formed in a shape of a flat plate, for example. For example, the detection electrode may be formed in a rectangular shape. The shape of the detection electrode is not limited to a particular shape and may be configured according to the outer shape of the arm, for example. The non-contact sensor 2 generates an electric field from its detection electrode. The electric field is generated by the non-contact sensor 2 in a predetermined direction. Specifically, the non-contact sensor 2 generates an electric field in the direction opposite to the direction towards the main body of the robot 1, to which the non-contact sensor 2 is attached. In other words, the non-contact sensor 2 generates an electric field toward the circumference surrounding the robot 1. The detection electrode of the non-contact sensor 2 creates a capacitance between itself and an object nearby. The capacitance varies as the distance changes between the detection electrode and the object. The non-contact sensor 2 outputs a sensor value representative of the capacitance created between the detection electrode and the object. The non-contact sensor 2 uses an amplifier to amplify a voltage appearing at the detection electrode that reflects the created capacitance and outputs the amplified voltage as a sensor value. The circuit configuration of the non-contact sensor 2 is not limited to a particular circuit configuration. The detection electrode may be provided with a known shield electrode, active shield electrode, or the like that is placed on the side of the detection electrode opposite to the side for generating the electric field (or on the side facing the main body of the robot 1).

With such a configuration, the non-contact sensor 2 outputs the sensor value reflecting the capacitance created between itself and the object (i.e., reflecting the distance from the object).

The control apparatus 3 is a robot control apparatus. Specifically, the control apparatus 3 is an information processing apparatus that controls the operation of the robot 1. For example, the control apparatus 3 includes a CPU, a memory, a communication device, and a storage device. The CPU is an example of a processor that executes preinstalled programs stored in the storage device, the memory, or other storage circuits, for example, to thereby perform various functions, which will be described below. The communication device includes a communication interface, or the like. The storage device includes a hard disk, or the like, and stores information such as various programs needed to perform robot functions. The control apparatus 3 can be implemented by an information processing apparatus that is either a dedicated computer or a general-purpose computer.

### <Functional Configuration>

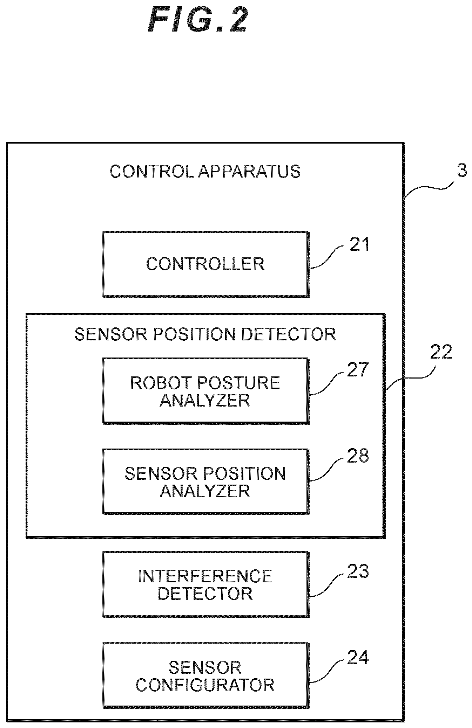

Fig. 2 shows examples of various functions of the control apparatus 3. The control apparatus 3 includes a controller 21, a sensor position detector 22, an interference detector 23, and a sensor configurator 24. The functions of the control apparatus 3 are implemented by the CPU or the like executing the programs stored in the storage device etc.

The controller 21 controls the operation of the robot 1. Specifically, the controller 21 controls the operation of the arms of the robot 1 so that the robot 1 performs predetermined tasks. More specifically, the controller 21 controls the rotation of the rotating shafts forming the joints of the robot 1.

The controller 21 stops the operation of the robot 1 according to the sensor value outputted from the non-contact sensor 2. Specifically, the controller 21 compares the sensor value with a threshold, and determines whether any object is found in close proximity to the robot 1. If an object is determined to be present in close proximity to the robot 1, the controller 21 stops the operation of the robot 1. For example, when the sensor value increases, in response to an object closing in, to reach or exceed the threshold, the controller 21 determines that an object is present in close proximity. The controller 21 stops the operation, for example, even when the robot 1 is still in the middle of operation. Alternative to stopping the operation, the controller 21 may slow down the operation of the robot 1.

The sensor position detector 22 detects the position (coordinates) assumed by each of the non-contact sensors 2 in accordance with the posture of the robot 1. In order to be able to perform this function, the sensor position detector 22 includes a robot posture analyzer 27 and a sensor position analyzer 28.

The robot posture analyzer 27 determines the posture of the robot 1. Specifically, the robot posture analyzer 27 reads the angles of the rotating shafts constituting the joints of the robot 1. For example, the robot posture analyzer 27 reads the angles of the rotating shafts (angles of the joints) from the encoders provided for the rotating shafts. The robot posture analyzer 27 then calculates the posture of the robot 1 from the angles of the rotating shafts. For example, the posture of the robot 1 is expressed by the position and direction of the respective rotation centers of the rotating shafts constituting the robot 1. The robot posture analyzer 27 calculates the posture of the robot 1 from the angles of the rotating shafts using link parameters. The link parameters provide information that associates the angles of the rotating shafts with the relative positions and directions of the rotating shafts. The robot posture analyzer 27 thereby calculates the positions and directions of the rotation centers of the rotating shafts from the angles of the rotating shafts, and determines the posture of the robot 1. For example, the posture of the robot 1 is determined with reference to the base 7, which is positioned at a fixed location.

The sensor position analyzer 28 determines the position (coordinates) assumed, in association with a posture of the robot, by the respective non-contact sensors 2 installed on the robot 1. Specifically, the sensor position analyzer 28 analyzes the positions and directions of the rotation centers of the rotating shafts, which are calculated by the robot posture analyzer 27, to determine the positions of the non-contact sensors 2.

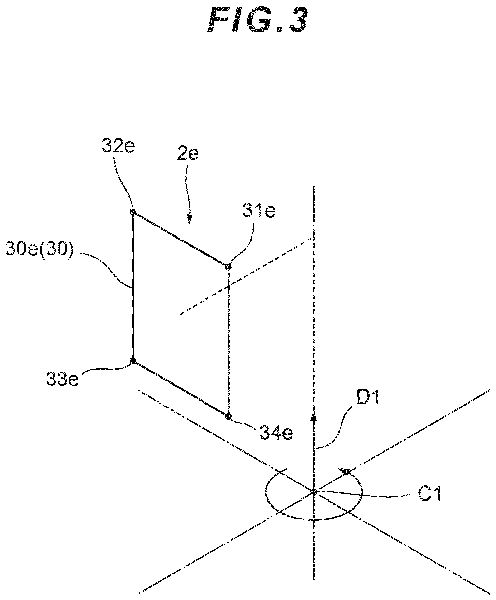

Fig. 3 is a diagram showing an exemplary method for determining the position of the non-contact sensor 2. The sensor position analyzer 28 determines the position of the sensor surface 30 of the non-contact sensor 2. The sensor surface 30 represents the surface of the detection electrode of the non-contact sensor 2. Fig. 3 shows an exemplary position assumed by a sensor surface 30e(30) of the non-contact sensor 2e, which is determined by the sensor position analyzer 28. The non-contact sensor 2e is installed on the fourth arm A4. The position of the non-contact sensor 2e is thus determined with reference to the rotating shaft for rotating the fourth arm A4. Fig. 3 shows a rotation center C1 representing an exemplary rotation center of the rotating shaft for rotating the fourth arm A4 and a direction D1 representing an exemplary rotation direction of the rotation center C1. The relative position between the rotation center C1 and the non-contact sensor 2e stays unchanged regardless of postures assumed by the robot 1. The sensor position analyzer 28 analyzes sensor position parameters indicating the relative position between the rotation center C1 and the non-contact sensor 2e to determine the position of the non-contact sensor 2e. Specifically, the sensor position analyzer 28 determines the position of the sensor surface 30e(30) with reference to the rotation center C1. Specifically, the sensor position analyzer 28 determines the position of the non-contact sensor 2e with reference to the rotation center C1. That is, the sensor position analyzer 28 analyzes a three-dimensional displacement, from the rotation center C1, of the extensive area of the sensor surface 30e to determine the position of the non-contact sensor 2e. For example, the sensor position analyzer 28 determines the positions of the four corners (a corner 31e, a corner 32e, a corner 33e, and a corner 34e) of the sensor surface 30e of the non-contact sensor 2e with reference to the rotation center C1. The position assumed by the non-contact sensor 2e in association with a posture of the robot 1 can thereby be determined, irrespective of any changes to the position of the robot 1. Because the position with reference to the rotation center C1 is determined, the direction for sensing an object (for example, the direction for generating the electric field) by the sensor surface 30e of the non-contact sensor 2e can also be determined.

With such a configuration, the sensor position analyzer 28 determines the position assumed by the sensor surface 30e of the non-contact sensor 2e in association with the posture of the robot 1. Similarly to the determination of the position of the non-contact sensor 2e, the sensor position analyzer 28 determines the position assumed, in association with the posture of the robot 1, by the sensor surface 30 of each of the other non-contact sensors 2.

Returning to Fig. 2, the interference detector 23 examines the positions of the non-contact sensors 2 determined by the sensor position analyzer 28 to determine whether any interference is occasioned between any two of the non-contact sensors 2. In other words, the interference detector 23 examines the positions of the sensor surfaces 30 of the non-contact sensors 2 to determine whether any interference is occasioned. Interference is detected when at least a part of one non-contact sensor 2 enters a detection range 37 of another non-contact sensor 2. The detection range 37 defines a detectable range of an object for the non-contact sensor 2. The detection range 37 is defined in advance for each of the non-contact sensors 2. Specifically, the detection range 37 is defined in advance in a shape of a three-dimensional space for each of the non-contact sensors 2. In the present embodiment, the detection range 37 is established in a shape of a rectangular parallelepiped space extending from the sensor surface 30 of each of the non-contact sensors 2.

The interference detector 23 designates one of the non-contact sensors 2 to be a "target sensor". The interference detector 23 then determines whether the target sensor and any of the other non-contact sensors 2, other than the target sensor 2, interfere with each other. In other words, the interference detector 23 determines whether any of the other non-contact sensors 2 became situated within the detection range 37 of the target sensor. More specifically, the interference detector 23 determines whether the sensor surface 30 of any of the other non-contact sensors 2 is situated in the detection range 37 defined in a shape of a rectangular parallelepiped space extending from the sensor surface 30 of the target sensor.

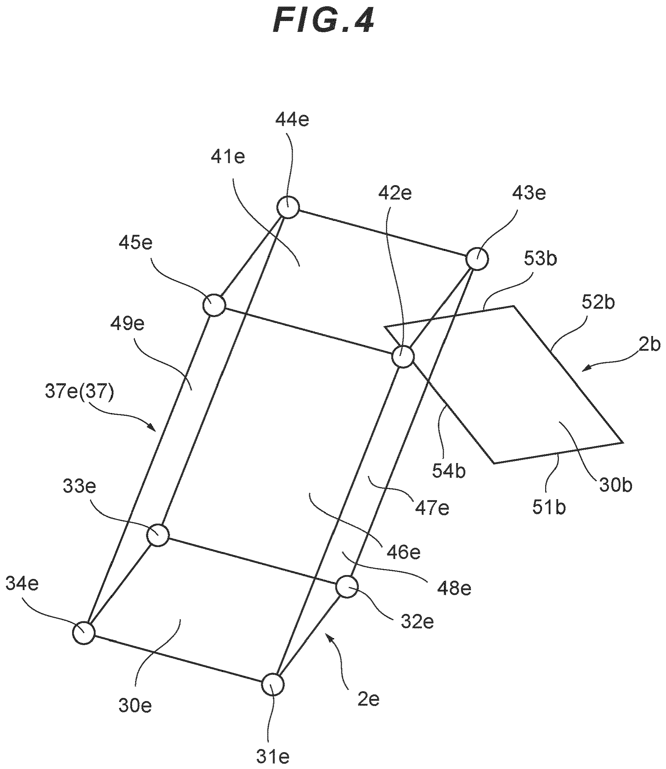

Fig. 4 is a diagram showing an example of a positional relationship that poses interference between the target sensor and any one of the other non-contact sensors 2, which does not include the target sensor. In Fig. 4, the non-contact sensor 2e represents the target sensor. In Fig. 4, the non-contact sensor 2b represents another non-contact sensor 2, which is not the target sensor. Fig. 4 shows an example of positional relationship between the sensor surface 30e of the non-contact sensor 2e, whose position is determined by the sensor position analyzer 28, and the sensor surface 30b of the non-contact sensor 2b. A detection range 37e, defined in a shape of rectangular parallelepiped space, is established in a predetermined direction from the sensor surface 30e of the non-contact sensor 2e, which is designated to be the target sensor. Specifically, the detection range 37e is defined in a shape of a rectangular parallelepiped space formed with the sensor surface 30e having four corners 31e, 32e, 33e, and 34e and a boundary surface 41e positioned at a predetermined detection distance from the sensor 30e and having four vertices, namely, a corner 42e, a corner 43e, a corner 44e, and a corner 45e. The detection range 37e is formed with four lateral surfaces extending between the sensor surface 30e and the boundary surface 41e, which are a boundary surface 46e, a boundary surface 47e, a boundary surface 48e, and a boundary surface 49e. The sensor surface 30b of the non-contact sensor 2b has four edges, namely, a side edge 51b, a side edge 52b, a side edge 53b, and a side edge 54b.

The interference detector 23 executes steps of a first determination, a second determination and a third determination to determine whether the target sensor and another non-contact sensor 2, which is not the target sensor, interfere with each other.

The interference detector 23 first performs the first determination. Specifically, the interference detector 23 establishes a plane coextensive with the sensor surface 30b of the non-contact sensor 2b, which represents another non-contact sensor other than the target sensor. The interference detector 23 designates one of the directions orthogonal to the plane to be a first direction and the other direction orthogonal to the plane to be a second direction. The interference detector 23 then determines whether the detection range 37e formed in a shape of rectangular parallelepiped space is situated in its entirety on the side of the first direction from the plane. Specifically, the interference detector 23 determines whether all of the eight corners (corners 31e to 34e and corners 42e to 45e) of the detection range 37e are situated on the side of the first direction from the plane. If all of the eight corners of the detection range 37e are situated on the side of the first direction from the plane, the interference detector 23 determines that there is no interference occasioned between the two sensors. The interference detector 23 also determines whether all of the eight corners (corners 31e to 34e and corners 42e to 45e) of the detection range 37e are situated on the side of the second direction from the plane. If all of the eight corners of the detection range 37e are situated on the side of the second direction from the plane, the interference detector 23 determines that there is no interference occasioned between the two sensors. If not all of the eight corners of the detection range 37e are situated on the side of the first direction or on the side of the second direction from the plane, the interference detector 23 performs the second determination. For example, the positional relationship between the two sensors 2e and 2b shown in Fig. 4 requires the second determination to be performed, because not all of the eight corners of the detection range 37e are situated on the side of the first direction or on the side of the second direction from the extended plane of the sensor surface 30b.

The interference detector 23 then performs the second determination. Specifically, the interference detector 23 determines whether any of the boundary surfaces of the detection range 37e of the non-contact sensor 2e, which is the target sensor, cuts across the non-contact sensor 2b, which is another non-contact sensor 2 other than the target sensor. The detection range 37e has the six boundary surfaces that are the sensor surface 30e, the boundary surface 41e, the boundary surface 46e, the boundary surface 47e, the boundary surface 48e, and the boundary surface 49e. The boundary surfaces, as referenced here, may include only the five surfaces, except the sensor surface 30e. The interference detector 23 determines whether any of the boundary surfaces cuts across the sensor surface 30b of the non-contact sensor 2b. Specifically, the interference detector 23 determines whether any one of the boundary surfaces cuts across any one of the side edges (side edge 51b, side edge 52b, side edge 53b, and side edge 54b) of the sensor surface 30b of the non-contact sensor 2b. If one of the boundary surfaces cuts, even partially, across one of the side edges of the sensor surface 30b of the non-contact sensor 2b, the interference detector 23 determines that interference is occasioned between the two sensors. This situation can be translated to mean that a part (not the entirety) of the non-contact sensor 2b is situated within the detection range 37e of the non-contact sensor 2e and thus there is interference occasioned between the two sensors. If none of the boundary surfaces cuts across any of the side edges of the sensor surface 30b of the non-contact sensor 2b, the interference detector 23 performs the third determination. Alternatively, if none of the boundary surfaces cuts across any of the side edges of the sensor surface 30b, the interference detector 23 may determine that there is no interference occasioned between the two sensors. Fig. 4 shows one of the boundary surfaces of the detection range 37e of the non-contact sensor 2e cuts across the non-contact sensor 2b, and the interference detector 23 therefore determines that there is interference occasioned between the two sensors.

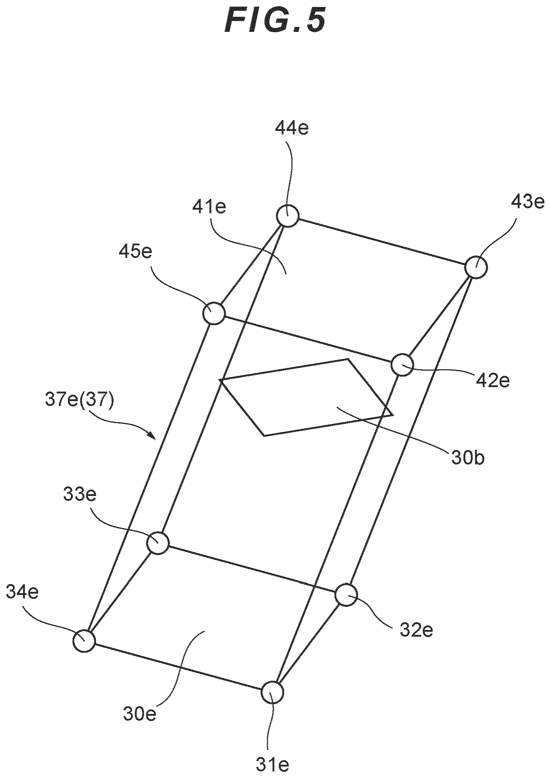

The interference detector 23 then performs the third determination. Specifically, the interference detector 23 determines whether the non-contact sensor 2b, which is another non-contact sensor 2 other than the target sensor, is situated in its entirety within the detection range 37e of the non-contact sensor 2e, which is the target sensor. In other words, the interference detector 23 determines whether the entire sensor surface 30b of the non-contact sensor 2b is situated within the detection range 37e. If the sensor surface 30b of the non-contact sensor 2b is determined to be situated in its entirety within the detection range 37e, the interference detector 23 determines that interference is occasioned. If the sensor surface 30b of the non-contact sensor 2b is determined to be situated in its entirety outside the detection range 37e, the interference detector 23 determines that no interference is occasioned. For example, if the sensor surface 30b of the non-contact sensor 2b is determined to be situated in its entirety within the detection range 37e of the non-contact sensor 2e as shown in Fig. 5, the third determination results in that interference is occasioned.

Through the execution of the first, second and third determinations, the interference detector 23 determines whether there is interference occasioned between the target sensor and a non-contact sensor 2 other than the target sensor. The interference detector 23 then designates another non-contact sensor 2 to be a new target sensor and determines whether there is interference occasioned between the new target sensor and any of the other non-contact sensors. During the determination process, each of the non-contact sensors 2 is designated in sequence to be a new target sensor, and the interference detector 23 determines, each time a new target sensor is designated, whether there is interference occasioned between the new target sensor and any of the rest of the non-contact sensors 2.

If the interference detector 23 determines that interference is occasioned, the sensor configurator 24 configures the two mutually interfering non-contact sensors 2 in a manner that eliminates the interference. Specifically, the sensor configurator 24 performs a process for eliminating interference in which the sensor configurator 24 configures the non-contact sensors 2, which interfere with each other because of a specific posture of the robot 1, to eliminate the interference, which is caused by the specific posture of the robot 1, from being occasioned.

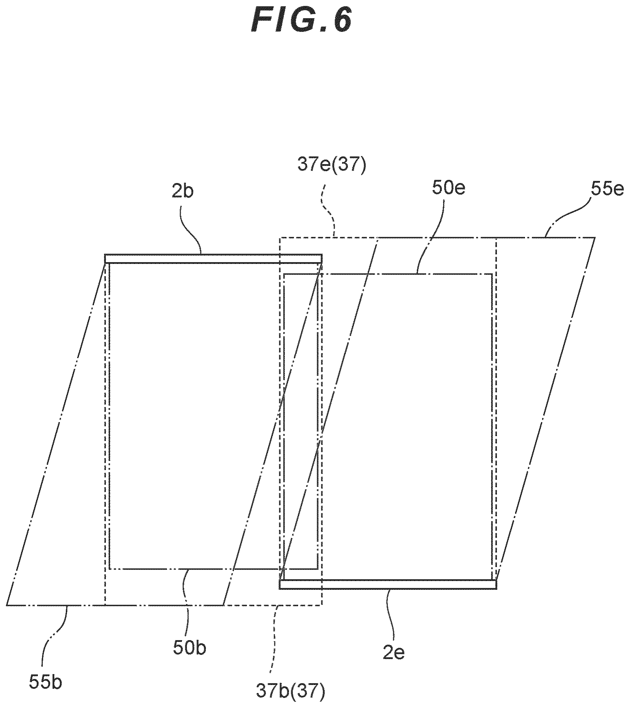

Fig. 6 is a diagram showing a first example of a process executed by the sensor configurator 24 to eliminate interference. Fig. 6 shows that interference is occasioned between the non-contact sensor 2e and the non-contact sensor 2b, for example. Specifically, the non-contact sensor 2b is situated within the detection range 37e of the non-contact sensor 2e. It should be noted that the non-contact sensor 2e is also situated in the detection range 37b of the non-contact sensor 2b. In such an occasion of interference, the sensor configurator 24 configures the non-contact sensors 2e and 2b to circumvent the detection of interference. Specifically, the sensor configurator 24 configures the non-contact sensor 2e and the non-contact sensor 2b so that one of them does not detect the other. The term "configure" used in the context of the present invention includes disabling the non-contact sensors 2e and 2b from generating the detection ranges 37e and 37b, respectively. For example, the non-contact sensors 2e and 2b are disabled to stop generating electric fields. Alternatively, the term "configure" includes disabling the control using the sensor values from these non-contact sensors 2e and 2b, while the non-contact sensors 2e and 2b are operated to allow the respective detection ranges 37e and 37b to remain in effect. Disabling the non-contact sensors 2e and 2b, which are occasioned to interfere with each other, from detecting each other circumvents the detection of interference and reduces false detections caused by the interference.

Fig. 6 also shows a second example of the process executed by the sensor configurator 24 to eliminate interference. The sensor configurator 24 configures the non-contact sensors 2e and 2b to change the object detection ranges 37. The sensor configurator 24 configures the non-contact sensor 2e and the non-contact sensor 2b to change the detection range 37e and the detection range 37b, respectively. Specifically, the sensor configurator 24 configures the non-contact sensor 2e and the non-contact sensor 2b to change both of the detection ranges 37e and 37b to reduce the detection distances (lower the sensitivities). Fig. 6 shows, for example, a detection range 50e, whose detection distance is reduced from the detection range 37e, and a detection range 50b, whose detection distance is reduced from the detection range 37b. As shown, reducing the detection distances circumvents the detection of interference. Specifically, the non-contact sensor 2b is no longer situated in the detection range 50e of the non-contact sensor 2e, and the non-contact sensor 2e is no longer situated in the detection range 50b of the non-contact sensor 2b. With the changes made, as discussed above, to the object detection ranges 37 of the non-contact sensors 2e and 2b interfering with each other, a false detection caused by the interference can be prevented.

Fig. 6 also shows a third example of the process executed by the sensor configurator 24 to eliminate interference. The sensor configurator 24 configures the non-contact sensors 2e and 2b to change the object detection directions. The sensor configurator configures the non-contact sensors 2e and 2b to change the directions of the detection ranges 37e and 37b. Specifically, the sensor configurator 24 changes the object detection directions so that the mutually interfering non-contact sensor 2b and 2e each do not enter the detection range 37e or 37b of the other. Fig. 6 shows, for example, a detection range 55e, whose detection direction is changed from the detection range 37e, and a detection range 55b, whose detection direction is changed from the detection range 37b. Changing the detection directions thus circumvents the detection of the interference. Specifically, the non-contact sensor 2b is no longer situated in the detection range 55e of the non-contact sensor 2e, and the non-contact sensor 2e is no longer situated in the detection range 55b of the non-contact sensor 2b. With the changes made, as discussed above, to the object detection directions of the non-contact sensors 2e and 2b interfering with each other, a false detection caused by the interference can be prevented.

### <Processing Procedure>

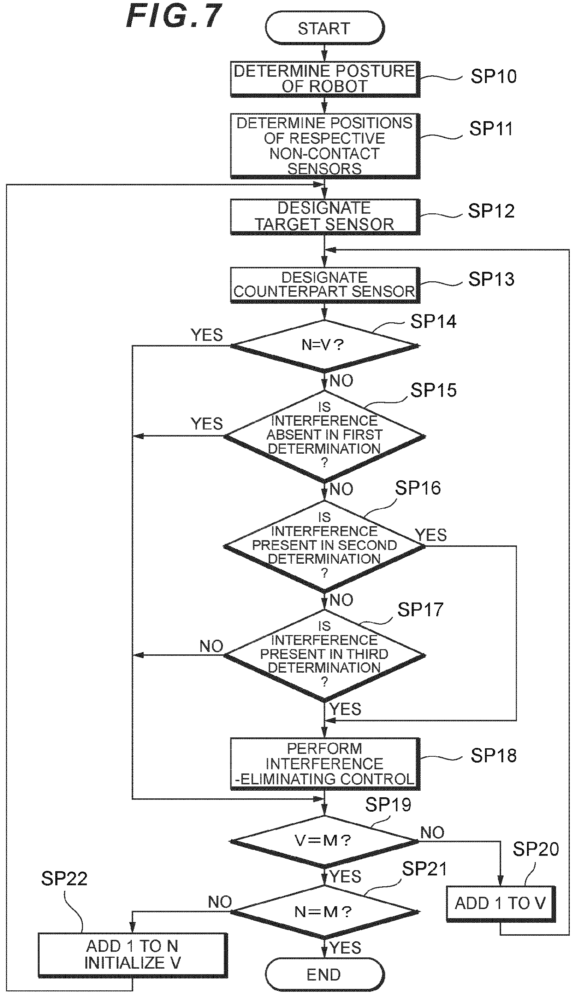

Fig. 7 is a flowchart showing an example of a procedure for determining interference according to the present embodiment. The following process steps are performed recursively at intervals of predetermined control periods during the operation of the robot 1. In other words, the interference detection process is performed in response to changes of the robot posture effected by the operation of the robot 1. The order and content of the following steps can be modified where appropriate.

In Fig. 7, the non-contact sensors 2 installed on the robot 1 are numbered from 1 through M. A specific non-contact sensor 2 is identified by a variable N and a variable V. Specifically, the variable N is set to identify a specific non-contact sensor 2 designated to be the target sensor. The variable V is set to identify a specific non-contact sensor 2 designated to examine interference with the target sensor. A non-contact sensor 2 identified by the variable V will be referred to as a "counterpart sensor". In the initial state, the variables N and V are both set equal to one (1) (initial value). The variables N and V are initialized to one before starting the following steps.

### (Step SP10)

The robot posture analyzer 27 reads the angle from the respective rotating shafts of the robot 1, and determines the posture of the robot 1. The process then proceeds to step SP11.

### (Step SP11)

The sensor position analyzer 28 examines the posture of the robot to determine the position of the respective non-contact sensors 2 installed on the robot 11. The process then proceeds to step SP12.

### (Step SP12)

The interference detector 23 designates the non-contact sensor 2 identified by the variable N to be a target sensor. For example, the non-contact sensor 2 identified by the variable N = 1 is designated to be the target sensor. The process then proceeds to step SP13.

### (Step SP13)

The interference detector 23 designates the non-contact sensor 2 identified by the variable V to be a counterpart sensor. For example, the non-contact sensor 2 identified by the variable V = 1 is designated to be a counterpart sensor. The process then proceeds to step SP14.

### (Step SP14)

The interference detector 23 determines whether the variable N for specifying the target sensor and the variable V for specifying the counterpart sensor are the same number. If the variables N and V are the same, the process proceeds to step SP19. If the variables N and V are different, the process proceeds to step SP15.

### (Step SP15)

The interference detector 23 performs the first determination on the target sensor specified by the variable N and the counterpart sensor specified by the variable V. If it is determined in the first determination that no interference is occasioned between them, the process proceeds to step SP19. If it is not determined in the first determination that no interference is occasioned between them, the processing proceeds to step SP16.

### (Step SP16)

The interference detector 23 performs the second determination on the target sensor specified by the variable N and the counterpart sensor specified by the variable V. If it is determined in the second determination that there is an occasion of interference, the process proceeds to step SP18. If it is not determined in the second determination that there is an occasion of interference, the process proceeds to step SP17.

### (Step SP17)

The interference detector 23 performs the third determination on the target sensor specified by the variable N and the counterpart sensor specified by the variable V. If it is determined in the third determination that no interference is occasioned, the process proceeds to step SP19. If it is determined in the third determination that there is an occasion of interference, the process proceeds to step SP18.

### (Step SP18)

The sensor configurator 24 performs the process for eliminating the interference between the non-contact sensors 2 interfering with each other (the target sensor identified by the variable N and the counterpart sensor identified by the variable V). The process proceeds to step SP19.

### (Step SP19)

The interference detector 23 determines whether the variable V is set equal to M, the last number. If the variable V is not set equal to M, the processing proceeds to step SP20. If the variable V is set equal to M, the process proceeds to step SP21.

### (Step SP20)

The interference detector 23 increments the variable V by one. The process then returns to step SP13, and the process is repeated from there. Specifically, while the target sensor identified by the variable N stays same, a new non-contact sensor 2 keeps designated by an increment of the variable V to be the counterpart sensor, and the interference determination is performed recursively each time the variable V is incremented.

### (Step SP21)

The interference detector 23 determines whether the variable N is set equal to M, the last number. If the variable N is not set equal to M, the process proceeds to step SP22. If the variable N is set equal to M, the process ends.

### (Step SP22)

The interference detector 23 increments the variable N by one. In addition, the interference detector 23 initializes the variable V to the initial value (i.e., 1). The process then returns to step SP12, and the process is repeated from there.

As described above, it is determined in association with the posture of the robot 1 during operation whether there is an occasion of interference between two non-contact sensors 2. If it is determined that there is an occasion of interference, countermeasures (interference-eliminating control) are performed. Note that after the interference-eliminating control is performed on the non-contact sensors 2 interfering with each other, the robot 1 changes its configuration into a posture that no longer causes interference, the interference-eliminating control should preferably be terminated.

### <Operation and Effects>

As described above, in the present embodiment, the determination can be made in association with the posture of the robot 1 as to whether the non-contact sensors 2 are occasioned to pose interference between them. As such, it can be distinguished whether the non-contact sensors 2 are situated to detect an object contemplated to be detected or are situated to detect each other. In other words, false detections by the non-contact sensors 2 can be reduced. If the interference-related determination of the present invention is not executed, the non-contact sensors 2 would need to be installed on locations of the robot 1 that prevent interfere with each other. By contrast, because an interference determination is performed through which an occasion of interference can be detected, the robot 1 can be equipped with more number of non-contact sensors 2, or the sensor surfaces 30 of the non-contact sensors 2 can be increased. This can enlarge the space in which an object is detectable.

If one non-contact sensor 2 becomes situated within the detection range 37 of the target sensor, it can be determined that the target sensor and the one non-contact sensor 2 are occasioned to interfere with each other.

Since the detection range 37 is established to be a three-dimensional space, an occasion or no occasion of interference can be three-dimensionally determined, and thus the accuracy of interference determination is improved.

If a boundary surface of the detection range 37 of the target sensor cuts across another non-contact sensor 2 or if the other non-contact sensor 2 is situated in its entirety within the detection range 37 of the target sensor, it can be determined that the target sensor and the other non-contact sensor 2 are occasioned to interfere with each other.

If there is an occasion of interference, the detection of the interference can be circumvented by configuring the non-contact sensors 2, which interfere with each other, in a manner that eliminates the interference. In other words, false detections of an object by the non-contact sensors 2 are reduced.

The interference elimination operation of configuring two mutually interfering non-contact sensors to disable their object detection function, configuring two mutually interfering non-contact sensors to change their detection ranges 37, or configuring two mutually interfering non-contact sensor to change the detection directions is performed to effectively circumvent the detection of interference. In other words, false detections of an object by the non-contact sensors 2 are reduced.

### === Modifications ===

The present invention is not limited to the foregoing embodiments. Any modifications made by those skilled in the art through appropriate design changes to the foregoing specific example are also included in the scope of the present invention as long as such modifications have the features of the present invention. Moreover, the components included in the foregoing embodiments and modifications described below can be combined where technically feasible. Such combinations are also included in the scope of the present invention as long as the combinations have the features of the present invention.

In the foregoing embodiments, for example, the robot posture detector 27 is described to determine the posture of the robot 1 using the angle of the respective joints of the robot 1. However, the method for determining the posture of the robot 1 is not limited to the particular embodiment. The robot posture detector 27 may determine the posture of the robot 1 in a way that captures images of the robot 1 using a camera or the like, and analyzes the images. Alternatively, the posture of the robot 1 may be determined using control signals from the controller 21 that controls the operation of the robot 1.

In the foregoing embodiments, the detection ranges 37 are defined in a shape of a rectangular parallelepiped space. However, the detection ranges 37 can be defined according to the configuration of the sensors. Specifically, the detection range 37 is not limited to a rectangular parallelepiped shape and may be defined with a shape, a direction, a size (distance), and other factors freely chosen as long as they are appropriate.

In the foregoing embodiments, the first, second and third operations for eliminating interference have been described as separately performed functions. However, these operations may be combined. Moreover, the first, second and third operations are not exhaustive on the list of the interference elimination operations. For example, the list of operations includes an operation of manually changing the angles of the sensor surfaces 30.

An arrangement may be adopted in advance in which only a limited number of non-contact sensors 2, among the non-contact sensors 2 installed on the robots 1, are examined to detect interfere during the operation of the robot 1. That is, combinations of non-contact sensors 2 to be examined to detect interference may be restricted in advance. By limiting in advance, the number of non-contact sensors 2 to be examined, the combinations of non-contact sensors 2 to be examined to detect interference can be reduced and the efficiency of processing can be improved. An arrangement may be adopted in which non-contact sensors 2 are selectively examined to detect interfere according to the posture of the robot 1.

The foregoing embodiment is contemplated to determine whether two non-contact sensors 2 are occasioned to interfere with each other. An arrangement may be adopted in which if a section of the detection range 37 of the non-contact sensor 2 is determined to interfere with another non-contact sensor 2, other sections of the detection range 37 may still be dedicated to detect the presence of an object.

## Claims

1. A robot control apparatus (3) of a robot (1) equipped with non-contact sensors (2, 2b, 2e), the robot control apparatus (3) **characterized by** comprising:
a sensor position detector (22) configured to determine a position assumed, in association with a posture of the robot (1), by each of the non-contact sensors (2, 2b, 2e); and
an interference detector (23) configured to designate one of the non-contact sensors (2, 2b, 2e) to be a target sensor (2, 2e) and another of the non-contact sensors (2, 2b, 2e) to be a counterpart sensor (2, 2b) and examine the determined positions of the non-contact sensors (2, 2b, 2e) to determine whether the counterpart sensor (2, 2b) is situated in a preset detection range (37) of the target sensor (2, 2e) to cause interference to the target sensor (2, 2e).

2. The robot control apparatus (3) according to claim 1, **characterized in that** the interference detector (23) is configured to, upon a determination that the counterpart sensor (2, 2b) is situated in the present detection range (37) of the target sensor (2, 2e), determine that the counterpart sensor (2, 2b) causes interference to the target sensor (2, 2e).

3. The robot control apparatus (3) according to claim 1 or 2, **characterized in that** the detection range (37) of the target sensor (2, 2e) is defined in advance in a shape of a three-dimensional space.

4. The robot control apparatus (3) according to claim 1 or 2, **characterized in that** the detection range (37) of the target sensor (2, 2e) is defined with boundary surfaces (41e, 46e, 47e, 48e, 49e), and the interference detector (23) is configured to, upon a determination that one of the boundary surfaces (41e, 46e, 47e, 48e, 49e) cuts across the counterpart sensor (2, 2b) or upon a determination that the counterpart sensor (2, 2b) is situated in its entirety in the detection range (37), determine that the counterpart sensor (2, 2b) causes interference to the target sensor (2, 2e).

5. The robot control apparatus (3) according to claim 1 or 2, **characterized by** further comprising a sensor configurator (24) configured to, upon a determination by the interference detector (23) that the counterpart sensor (2, 2b) causes interference to the target sensor (2, 2e), configure at least one of the target sensor (2, 2e) and the counterpart sensor (2, 2b) in a manner that eliminates the interference.

6. The robot control apparatus (3) according to claim 5, **characterized in that** the sensor configurator (24) is configured to perform at least one of interference eliminating operations on at least one of the target sensor (2, 2e) and the counterpart sensor (2, 2b), wherein the interference elimination operations include disabling an object detection function of the target sensor (2, 2e), changing the detection range (37) of the target sensor (2, 2e), and changing a detection direction of the target sensor (2, 2e).
